# EUROPÄISCHE PATENTSCHRIFT

(11) **EP 2 592 022 B1**
(45) Veröffentlichungstag und Bekanntmachung des Hinweises auf die Patenterteilung: **17.09.2014**
(21) Anmeldenummer: 12190368.6
(22) Anmeldetag: 29.10.2012
(51) Int. Cl.: B65G 1/137

(54) **Verfahren zum Lagern und Kommissionieren**
Method for storing and picking
Procédé de stockage et de conditionnement

(30) Priorität: 08.11.2011 DE 102011055123
(43) Veröffentlichungstag der Anmeldung: 15.05.2013
(73) Patentinhaber: Dematic GmbH, 63073 Offenbach (DE)
(72) Erfinder: Stötzner, Matthias, 63500 Seligenstadt (DE)
(74) Vertreter: Moser & Götze

(56) Entgegenhaltungen:
- WO-A1-2011/028136
- DE-A1-102007 046 424
- DE-C2- 4 203 823
- JP-A- 2007 246 199

## Beschreibung

Die Erfindung betrifft ein Verfahren zum Lagern und Kommissionieren nach dem Ware-zum-Mann Prinzip.

Beim Kommissionieren nach dem Ware-zum-Mann Prinzip werden Lagerbehälter von einem Lager zu einer Kommissionierstation zur auftragsgerechten Entnahme von Artikeln zugeführt. Dabei werden die Lagerbehälter üblicherweise in der benötigten Reihenfolge einzeln der Kommissionierstation zugeführt. Dazu werden sie in Puffersystemen im Einzelzugriff zwischengelagert.

Die WO 2011/028136A1 beschreibt ein System für das Lagern und Bereitstellen von Behälterstapeln sowie deren Umstapeln in Teilstapel.

Die gattungsgemässe DE 42 03 823 C2 beschreibt die Lagerung von Behältern aufeinander in Stapeln, die von unten her gestützt sind, so dass immer der Unterste entnommen werden kann. Der Behälter wird dann zum Kommissionieren verbracht. Gemäß Spalte 7 unten, können die Stapel eine bestimmte Reihenfolge aufweisen, die durch Umschichten erreichbar ist.

Demgegenüber besteht die Aufgabe der vorliegenden Erfindung ein Verfahren zum Lagern und Kommissionieren nach dem Ware-zum-Mann Prinzip bereitzustellen, bei dem der im Lager zur Verfügung stehende Raum optimal genutzt und gleichzeitig die Kommissionierung erleichtert wird.

Diese Aufgabe wird durch das in Anspruch 1 wiedergegebene Verfahren gelöst.

Dadurch, dass bei dem erfindungsgemäßen Verfahren zum Lagern und Kommissionieren nach dem Ware-zum-Mann Prinzip Behälter direkt aufeinander als Stapel im Lager gelagert werden, der komplette Stapel unsortiert gemeinsam ausgelagert an einer Kommissionierstation zur Entnahme der auftragsbedingten Artikel aus dem obersten Behälter des Stapels bereitgestellt wird, wobei ein dazu benötigter Behälter vorher durch Umstapeln nach oben im Stapel bewegt werden kann, ist es möglich, einerseits den zur Verfügung stehenden Raum zu optimieren bzw. durch die Minimierung der Lagerplatzanzahll erhebliche Einsparungen zu erzielen und gleichzeitig die Kommissionierung dadurch zu erleichtern, dass derjenige Behälter, aus dem auftragsbedingt Artikel entnommen werden sollen, bereits durch seine Position oben im Stapel auf einer geeigneten Höhe dem Kommissionierer bereitgestellt wird. Es muss ggf. (je nach Behältergröße der verwendeten Behälter) keine weitere oder lediglich ein kleine Höhenanpassung vorgenommen werden.

Insbesondere ist das Kommissionierverfahren ein manuelles Kommissionierverfahren.

In einer bevorzugten Alternative erfolgt das Umstapeln beim Auslagern aus dem Lager auf einem Lastaufnahmemittel, wie z. B. einem Regalbediengerät.

Alternativ kann das Umstapeln in einer zwischen Lager und Kommissionierstation liegenden Umstapeleinrichtung, wie einem Zwischenpuffer stattfinden.

Es versteht sich, dass der Stapel ein 2er, 3er, 4er, 5er usw. Stapel sein kann. Wenn der verwendete Stapel mindestens drei Behälter umfasst, ergibt sich eine besonders vorteilhafte Kombination aus Lagerplatzoptimierung und Kommissionierhöhe.

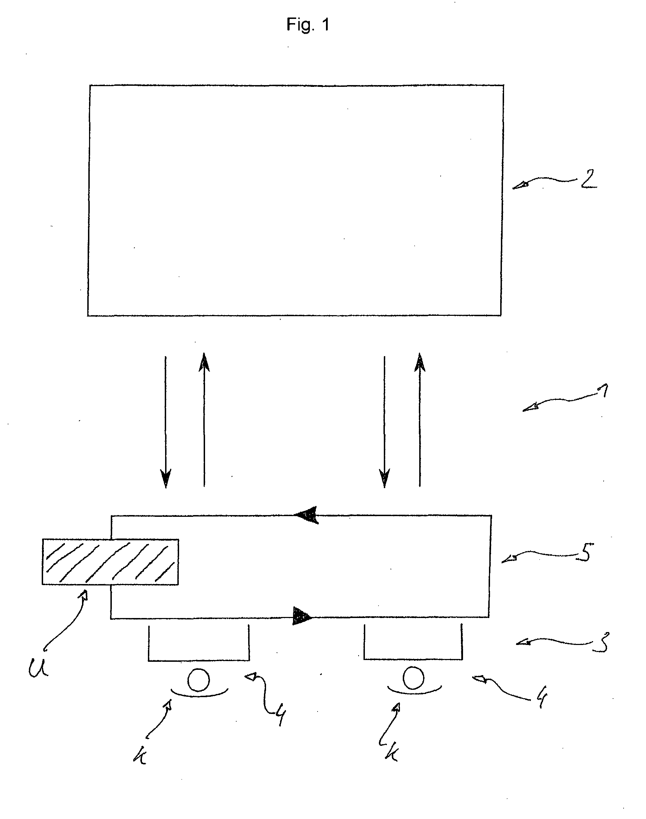

Weitere Einzelheiten der Erfindung ergeben sich aus der nachfolgenden Beschreibung eines Ausführungsbeispiels anhand der Zeichnung, in der
Fig. 1 eine schematische Draufsicht auf ein gemäß der Erfindung betriebenes Lager- und Kommissioniersystem und
Fig. 2 eine schematische Seitenansicht auf das System aus Figur 1.

In den Figuren ist ein als Ganzes mit 1 bezeichnetes Lager- und Kommissioniersystem gezeigt.

Das System 1 umfasst ein Lager 2 und einen Kommissionierbereich 3 mit zwei manuellen Kommissionierstationen 4.

Da das System 1 nach dem Ware-zum-Mann Prinzip funktioniert, werden die für einen zu kommissionierenden Auftrag benötigten Artikel aufgrund der Bestellung in der benötigten Reihenfolge in Behältern aus dem Lager 2 zu den Kommissionierstationen 4 über eine geeignete Fördertechnik 5 gefördert, wo der jeweilige Kommissionierer K gezielt die benötigte Menge der Artikel aus dem jeweiligen Behälter B entnimmt.

Im Lager 2 werden die Behälter B direkt aufeinander als Stapel S von jeweils drei Behältern B auf Regalböden gelagert.

Der jeweilige Stapel S, im dem ein Behälter B mit benötigten Artikeln enthalten ist, wird gemeinsam als kompletter Stapel mittels eines geeigneten Regalbediengeräts (nicht gezeigt) ausgelagert.

Anschließend wird der Stapel S an der entsprechenden Kommissionierstation 4 zur Entnahme der auftragsbedingten Artikel aus dem obersten Behälter B des Stapels S bereitgestellt.

Ist der benötigte Behälter B nicht oben im Stapel S angeordnet, wird der Behälter B vorher durch Umstapeln in einer Umstapeleinrichtung U nach oben im Stapel S bewegt.

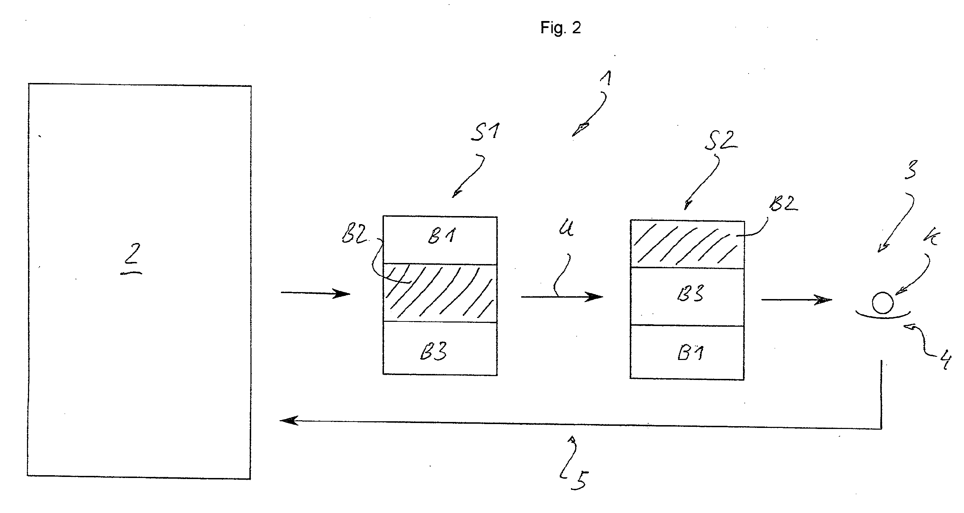

Wird also (vgl. Figur 2) ein Artikel aus einem Behälter B2 in einem Stapel S1 benötigt, der sich in einem dreier Stapel in der Mitte befindet, so wird der Stapel S1 in der Umstapeleinrichtung U so umgestapelt, dass der Behälter B2 in dem nun veränderten Stapel S2 oben angeordnet ist.

Im einfachsten Fall wird der ursprünglich oberste Behälter B1 vom Stapel S1 abgenommen und der so entstandene Teilstapel wird auf den Behälter B1 aufgesetzt, so dass sich der Stapel S2 ergibt.

Nach Beendigung der Kommissionierung kann der jeweilige Stapel S einfach erneut eingelagert werden. Eine vorherige Umstapelung ist unnötig, da die Systemüberwachung den Ort (auch im Stapel) jedes Behälters B "kennt" bzw. mittels RFID oder Barcode bestimmen kann.

## Patentansprüche

1. Verfahren zum Lagern und Kommissionieren nach dem Ware-zum-Mann Prinzip umfassend die Schritte des Lagerns von Behältern (B, B1, B2, B3) direkt aufeinander als Stapel (S, S1, S2) mit mindestens zwei Behältern (B, B1, B2, B3) im Lager (2), **gekennzeichnet durch** das unsortierte gemeinsame Auslagern des kompletten Stapels (S, S1, S2) und **durch** die Bereitstellung des kompletten Stapels (S, S1, S2) an einer Kommissionierstation (4) zur Entnahme der auftragsbedingten Artikel aus dem obersten Behälter (B, B1, B2, B3) des Stapels (S, S1, S2), wobei ein dazu benötigter Behälter (B, B1, B2, B3) vorher **durch** Umstapeln nach oben im Stapel (S, S1, S2) bewegt wird.

2. Verfahren nach Anspruch 1, **dadurch gekennzeichnet, dass** das Umstapeln beim Auslagern aus dem Lager (2) auf einem Lastaufnahmemittel stattfindet.

3. Verfahren nach Anspruch 1, **dadurch gekennzeichnet, dass** das Umstapeln in einer zwischen Lager (2) und Kommissionierstation (4) liegenden Umstapeleinrichtung (U) stattfindet.

## Claims

1. A method of storage and order fulfilment in accordance with the "Goods to Man" principle including the steps of storing containers (B, B1, B2, B3) directly on top of one another in the form of a stack (S, S1, S2) with at least two containers (B, B1, B2, B3) in the store (2), **characterised by** the unsorted, common removal from storage of the complete stack (S, S1, S2) and by the provision of the complete stack (S, S1, S2) to an order fulfilment station (4) for removal of the ordered articles from the uppermost container (B, B1, B2, B3) of the stack (S, S1, S2), wherein a container (B, B1, B2, B3) required for this purpose is previously moved upwards in the stack (S, S1, S2) by restacking.

2. A method as claimed in claim 1, **characterised in that** the restacking occurs when removing goods from the store (2) on a load handling device.

3. A method as claimed in claim 1, **characterised in that** the restacking takes place in a restacking device (U) situated between the store (2) and the order fulfilment station (4).

## Revendications

1. Procédé de stockage et de préparation de commandes selon le principe Marchandises vers Homme, ledit procédé comprenant les étapes consistant à stocker des conteneurs (B, B1, B2, B3) directement les uns sur les autres, sous la forme d'une pile (S, S1, S2) comportant au moins deux conteneurs (B, B1, B2, B3), dans le magasin (2), **caractérisé par** le déstockage collectif sans tri de toute la pile (S, S1, S2) et par la mise à disposition de toute la pile (S, S1, S2) au niveau d'un poste de préparation de commandes (4) afin de retirer des articles, liés à une commande, du conteneur supérieur (B, B1, B2, B3) de la pile (S, S1, S2), un conteneur (B, B1, B2, B3) nécessaire à cette opération étant préalablement placé en haut de la pile (S, S1, S2) par ré-empilage.

2. Procédé selon la revendication 1, **caractérisé en ce que** le ré-empilage est effectué sur un moyen de réception de charge lors du déstockage du magasin (2).

3. Procédé selon la revendication 1, **caractérisé en ce que** le ré-empilage est effectué dans un dispositif de ré-empilage (U) situé entre le magasin (2) et le poste de préparation de commandes (4).
